# EUROPEAN PATENT APPLICATION

(11) **EP 3 382 697 A1**
(43) Date of publication of application: **03.10.2018**
(21) Application number: 18164657.1
(22) Date of filing: 28.03.2018
(51) Int. Cl.: G10L 15/22

(54) **VOICE SERVER, VOICE RECOGNITION SERVER SYSTEM, AND METHOD OF OPERATING THE SAME**

(30) Priority: 30.03.2017 KR 20170041050
(71) Applicant: LG Electronics Inc., Yeongdeungpo-Gu Seoul 07336 (KR)
(72) Inventor: YIM, Taehyeong, 08592 Seoul (KR); KWON, Mingu, 08592 Seoul (KR); KIM, Sunghak, 08592 Seoul (KR); SHIN, Kyuyeol, 08592 Seoul (KR); OH, Jeongkyu, 08592 Seoul (KR); HAN, Dongwoo, 08592 Seoul (KR)
(74) Representative: Vossius & Partner Patentanwälte Rechtsanwälte mbB

(57) **Abstract**

A method of operating a voice server is disclosed. The method includes receiving voice data from a home appliance, converting the received voice data into text data, analyzing the text data to determine a voice command, transmitting a signal corresponding to the determined voice command to a predetermined server, receiving a response signal based on the determined voice command from the predetermined server, and converting a response signal based on the voice command into voice data and transmitting the response signal to the home appliance, thereby effectively recognizing and processing a voice command.

## Description

The present invention relates to a voice server, a voice recognition server system, and a method of operating the same, and more particularly to a voice server, a voice recognition server system, and a method of operating the same, for recognizing a natural language voice command of a user and controlling a home appliance.

Home appliances that are used in a predetermined space such as a home or an office, for example, an air conditioner, an air conditioner, a washing machine, and a vacuum cleaner perform unique functions and operations according to user manipulation.

For example, an air conditioner is a device that includes a compressor for compressing a refrigerant, a condenser for condensing the compressed refrigerant, an expansion valve for expanding the condensed refrigerant, and an evaporator for exchanging heat between the expanded refrigerant and indoor air to heat and cool an interior space and performs a function of adjusting an indoor temperature.

A refrigerator contains foodstuffs, a washing machine processes laundry, a vacuum cleaner cleans, and a cooking device cooks foodstuffs.

For an operation of a home appliance such as an air conditioner, a user may use a remote control device such a remoter controller due to inconvenience of directly manipulating buttons included in a body of a home appliance or moving to a main body and inputting a signal each time.

However, there is a problem in that, even if a user uses a remote controller, they needs to select a manipulation key and to input a signal for each function and, thus, it is inconvenient to use the remote controller and, when an indoor area is dark, a separate illumination device for identifying a remote controller and a manipulation key.

Accordingly, research has been increasingly conducted into a method of controlling a home appliance using a voice recognition technology.

As disclosed in Cited Reference 1 (Korean Patent Publication No. 10-1999-00069703), a remote controller for an air conditioner includes a voice input unit and a signal processor to generate and transmit a manipulation signal based on voice recognition.

As disclosed in Cited Reference 2 (Korean Patent Publication No. 10-2006-0015092), an input voice signal is converted into a digital signal and a text and, then, whether a corresponding control command is present in a database is checked and, when the corresponding control command is present, each device in an air conditioner is controlled and, when the corresponding control command is not present, a keyword is extracted and each device in the air conditioner is controlled according to an associated control command.

However, there is a limit in a system resource to be included in a separate device such as a remote controller and an air conditioner. In particular, to recognize a natural language instead of recognizing only several simple words, high computational load is required and, thus, it is difficult to obtain the purpose via an embedded module installed in a separate device.

Thus, the voice recognition technologies disclosed in Cited References 1 and 2 have a limit in recognizing and processing various natural language voice commands of global users.

Accordingly, there is a need for a method of recognizing and processing a natural language without a limitation of a system resource of a separate device and conveniently controlling a home appliance.

In addition, to enhance user convenience and satisfaction, there is a need to provide user experience (UX) in consideration of various situations that may occur during a voice recognition procedure and a home appliance control procedure.

### [Cited Reference]

### [Patent Document]

(Patent Document 1) 1. Korean Patent Publication No. 10-1999-00069703 (Published on September 6, 1999)
(Patent Document 2) 2. Korean Patent Publication No. 10-2006-0015092 (Published on February 18, 2006)

### SUMMARY OF THE INVENTION

Therefore, the present invention has been made in view of the above problems, and it is an object of the present invention to provide a voice recognition method and system for effectively recognizing and process a natural language.

It is another object of the present invention to provide a voice recognition server system for recognizing a user voice command to control a home appliance.

It is another object of the present invention to provide user experience (UX) in consideration of various situations that may occur during a voice recognition procedure and a home appliance control procedure.

In accordance with an aspect of the present invention, the above and other objects can be accomplished by the provision of a method of operating a voice server, the method including receiving voice data from a home appliance, converting the received voice data into text data, analyzing the text data to determine a voice command, transmitting a signal corresponding to the determined voice command to a predetermined server, receiving a response signal based on the determined voice command from the predetermined server, and converting a response signal based on the voice command into voice data and transmitting the response signal to the home appliance, thereby effectively recognizing and processing a voice command.

In accordance with another aspect of the present invention, there is provided a voice server including an automatic speech recognition server configured to receive voice data from a home appliance and to convert the received voice data into text data, a natural language processing server configured to receive the text data from the automatic speech recognition server and to analyze the received text data to determine a voice command, and a text to speech server configured to convert a response signal based on the voice command into voice data and to transmit the voice data to the home appliance, thereby effectively recognizing and processing a voice command.

In accordance with a further aspect of the present invention, there is provided a method of operating a voice recognition server system, the method including analyzing voice data received from a home appliance to determine a voice command, by a voice server, receiving a signal corresponding to the determined voice command from the voice server, by a link service server, generating a request signal corresponding to the determined voice command, by the link service server, receiving the request signal from the link service server, by a home appliance control server, transmitting a control signal based on the request signal to the home appliance, by the home appliance control server, and transmitting voice data including processing result information based on the voice command to the home appliance, by the voice server, thereby providing various services according to a voice input.

In accordance with yet another aspect of the present invention, there is provided a voice recognition server system including a voice server configured to receive voice data from a home appliance and to analyze the received voice data to determine a voice command, a link service server configured to receive a signal corresponding to the determined voice command from the voice server and to generate a request signal corresponding to the determined voice command, and a home appliance control server configured to transmit a control signal based on a request signal received from the link service server, to the home appliance, wherein the voice server transmits voice data including processing result information based on the voice command, to the home appliance, thereby providing various services according to a voice input.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic diagram showing a smart home system including a voice recognition server system and a home appliance according to an embodiment of the present invention;
FIG. 2 is a diagram showing various examples of a home appliance;
FIG. 3A is a diagram showing an example of a voice recognition server system according to an embodiment of the present invention;
FIG. 3B is a diagram showing an example of a voice recognition server system according to an embodiment of the present invention;
FIGS. 4 to 6 are diagrams showing signal flow of a voice recognition server system according to an embodiment of the present invention;
FIGS. 7 to 9 are diagrams showing an example of signal flow of a voice recognition server system according to an embodiment of the present invention;
FIG. 10 is an internal block diagram showing an example of a server according to an embodiment of the present invention;
FIG. 11 is an internal block diagram showing an example of a home appliance according to an embodiment of the present invention;
FIG. 12 is an internal diagram showing a portion of an air conditioner according to an embodiment of the present invention;
FIGS. 13 and 14 are schematic diagrams showing an outer appearance of an air conditioner according to an embodiment of the present invention;
FIG. 15 is a flowchart showing a method of operating a home appliance according to an embodiment of the present invention;
FIG. 16 is a flowchart showing a method of operating a smart home system including a voice recognition server system and a home appliance according to an embodiment of the present invention; and
FIGS. 17 to 21 are diagram for explanation of various operations of a voice recognition server system and a home appliance according to an embodiment of the present invention.

### DETAILED DESCRIPTION OF THE PREFERRED EMBODIMENTS

Exemplary embodiments of the present invention will be described with reference to the attached drawings. However, the present invention is not limited to the exemplary embodiments of the present invention and may be embodied in many different forms.

To clearly and briefly describe the present invention, a part without concerning to the description is omitted in the drawings, and like reference numerals designate like elements throughout the specification.

The suffixes "module" and "unit" of elements herein are used for convenience of description and do not have any distinguishable meanings or functions. Accordingly, the suffixes "module" and "unit" can be used interchangeably.

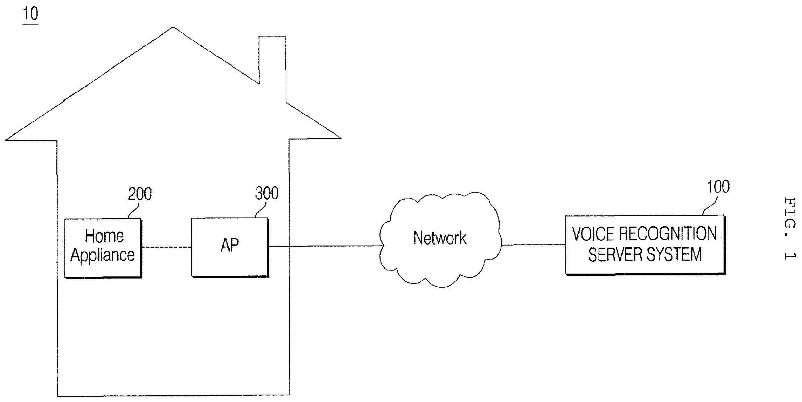

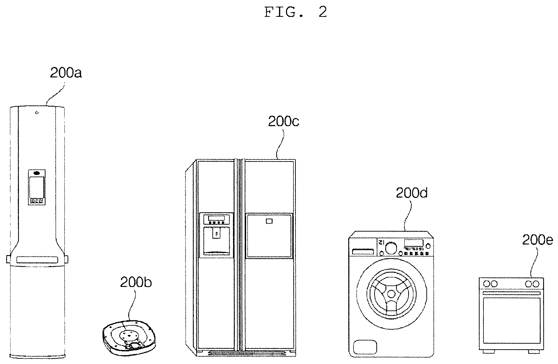

FIG. 1 is a schematic diagram showing a smart home system including a voice recognition server system and a home appliance according to an embodiment of the present invention. FIG. 2 is a diagram showing various examples of a home appliance.

Referring to FIG. 1, a smart home system 10 according to an embodiment of the present invention may include a home appliance 200 that includes a communication module (not shown) to communicate with other devices or is accessible to a network and a voice recognition server system 100 including a plurality of servers for voice recognition and control of a home appliance.

Referring to FIG. 2, the home appliance 200 may correspond to an air conditioner 200a, a robot vacuum cleaner 200b, a refrigerator 200c, a washing machine 200d, a cooking device 200e, or the like, which includes a communication module.

According to an embodiment of the present invention, the smart home system 10 may include a portable terminal (not shown) including a smart phone, a tablet personal computer (PC), or the like.

The home appliance 200 may include a communication module therein to communicate with electronic devices inside/outside the smart home system 10.

According to an embodiment of the present invention, the smart home system 10 may further include an access point (AP) device 300 and the home appliance 200 may access a wireless Internet network through the AP device 300 to communicate with other devices.

The AP device 300 may allocate a radio channel using a predetermined communication method to electronic devices in the smart home system 10 and perform wireless data communication through a corresponding channel.

Here, the predetermined communication method may be a Wi-Fi communication method. Accordingly, the communication module included in the home appliance 200 may be a Wireless Fidelity (WiFi) communication module but the present invention is not limited to a communication method.

The home appliance 200 may include different types of communication modules or a plurality of communication modules. For example, the home appliance 200 may include a near field communication (NFC) module, a Zigbee communication module, a Bluetooth™ communication module, or the like.

The home appliance 200 may be connectable to a server included in the voice recognition server system 100, a predetermined external server, a user portable terminal, or the like through the WiFi communication module or the like and may support a smart function such as remote monitoring and remote control.

A user may check information on the home appliance 200 in the smart home system 10 or control the home appliance 200 through a portable terminal.

To control the home appliance 200 or check predetermined information in a home, the user must go through the inconvenience of using a portable terminal.

For example, when a user does not know a current location of a portable terminal or is positioned in a different place from the portable terminal, it may be relatively effective to use another device for controlling the home appliance 200 using a different method from the above method.

According to an embodiment of the present invention, the home appliance 200 may receive a user voice input and the voice recognition server system 100 may recognize and analyze the user voice input and control the home appliance 200.

Accordingly, the user may control the home appliance 200 without manipulation of a portable terminal or a remote control device.

At least some of servers included in the voice recognition server system 100 may be a server managed by a manufacturing company or a sales company of a home appliance or a server managed by a company that is left in charge of a server by a manufacturing company or a sales company.

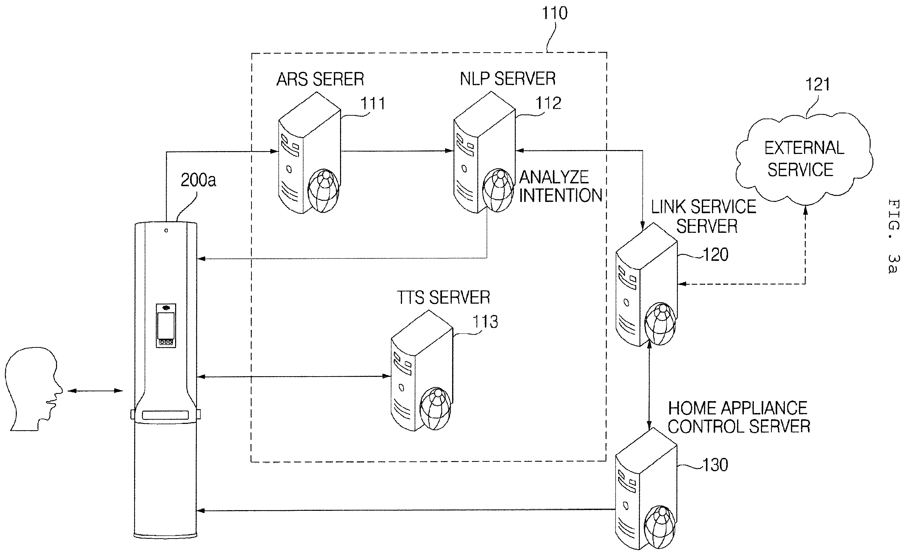

FIG. 3A is a diagram showing an example of a voice recognition server system according to an embodiment of the present invention.

Referring to FIG. 3A, the voice recognition server system according to an embodiment of the present invention may include a voice server 110 for receiving voice data from a home appliance 200a and analyzing the received voice data to determine a voice command.

The voice server 110 may receive the voice data from the home appliance 200a, convert the received voice data into text data, and analyze the text data to determine the voice command.

The voice server 110 may transmit a signal corresponding to the determined voice command to a predetermined server.

For example, the voice recognition server system according to an embodiment of the present invention may include a link service server 120 that receives a signal corresponding to the determined voice command from the voice server 110 and generates a request signal corresponding to the determined voice command and a home appliance control server 130 that transmits, to the home appliance 200a, a control signal based on the request signal received from the link service server 120.

The home appliance 200a may receive a voice command input uttered by a user and transmit voice data based on the received voice command to the voice server 110.

The voice server 110 may include an automatic speech recognition (ASR) server 111 that receives the voice data from the home appliance 200a and converts the received voice data into text data, a natural language processing (NLP) server 112 that receives the text data from the ASR server 111, analyzes the received data to determine a voice command, and transmits a response signal based on the determined voice command to the home appliance 200a, and a text to speech (TTS) server 113 that receives a signal including a text corresponding to the response signal from the home appliance 200a, converts a text included in the received signal into voice data, and transmits the voice data to the home appliance 200a.

The ASR server 111 may perform voice recognize on the voice data received from the home appliance 200a to generate text data and transmit the text data to the NLP server 112.

The NLP server 112 may analyze the text data received from the ASR server 111 according to a natural language processing algorithm to determine the voice command.

The NLP server 112 may process a natural language as a language that is normally used by the human according to the natural language processing algorithm and analyze user intent. The NLP server 112 may perform natural language processing on the text data received from the ASR server 111 to determine a voice command corresponding to the user intention.

Accordingly, the NLP server 112 may determine the voice command corresponding to the user intention even if a user inputs a voice command using a language that is normally used by the user.

The NLP server 112 may transmit a signal corresponding to the natural language processing result, i.e., a signal corresponding to the determined voice command to the link service server 120.

The link service server 120 may receive a signal corresponding to the determined voice command from the NLP server 112.

The link service server 120 may communicate with the home appliance control server 130 and perform a corresponding operation when the determined voice command is related to the home appliance 200a.

The link service server 120 may communicate with an external service 121 when the determined voice command is not related to the home appliance 200a.

For example, when the determined voice command is a command for requesting information on weather, stock, News, and so on, the link service server 120 may make a request for corresponding information to a server for providing a service corresponding to the requested information and receive the information.

The link service server 120 may transmit the received information to the voice server 110 and the NLP server 112 may transmit the received information to the home appliance 200a.

When the determined voice command is related to the home appliance 200a, the link service server 120 may generate a request signal corresponding to the determined voice command and transmit the request signal to the home appliance control server 130.

The home appliance control server 130 may transmit a control signal based on the request signal received from the link service server 120 to the home appliance 200a.

For example, upon receiving a request for a change in setting temperature of the air conditioner 200a, the home appliance control server 130 may transmit a control signal for a change in setting temperature to the air conditioner 200a.

The home appliance 200a may perform a corresponding operation according to the control signal received from the home appliance control server 130.

The home appliance 200a may perform a requested operation and, then, transmit a signal indicating that the operation is performed, to the home appliance control server 130.

The home appliance control server 130 may receive a response signal of the control signal from the home appliance 200a and transmit processing result information corresponding to the response signal to the link service server 120.

The voice server 110 may transmit the response signal including the processing result information to the home appliance 200a.

The voice server 110 may receive a signal including an output expression text corresponding to the result information from the home appliance 200a, convert the received output expression text into voice data, and transmit the voice data to the home appliance 200a.

In this case, the response signal based on the determined voice command transmitted to the home appliance 200a by the NLP server 112 may include the processing result information.

The home appliance 200a may receive the response signal based on the determined voice command from the NLP server 112. Here, the response signal may include text data of response corresponding to the determined voice command.

For example, when a user inputs a voice command for a change in setting temperature of an air conditioner, the response signal may include text data indicating that setting temperature is changed.

The home appliance 200a may transmit a signal including a text corresponding to the received response signal to the TTS server 113. Here, the signal including the text corresponding to the response signal may include an output expression text corresponding to the processing result information.

The TTS server 113 may convert the text included in the received signal into voice data and transmit the voice data to the home appliance 200a. Here, the converted voice data may include a sound source file.

The home appliance 200a may output a voice guidance message based on the received voice data through a speaker.

The link service server 120 may make a request for state information of the home appliance 200a to the home appliance control server 130 based on a signal corresponding to the determined voice command and the home appliance control server 130 may transmit the state information of the home appliance 200a to the link service server 120. When the state information of the home appliance 200a is not ensured, the home appliance control server 130 may make a request for the state information to the home appliance 200a and receive the state information.

When it is difficult to support the determined voice command based on the state information of the home appliance 200a, the link service server 120 may transmit a request signal corresponding to the determined voice command to the home appliance control server 130.

When it is not possible to support the determined voice command based on the state information of the home appliance 200a, the link service server 120 may transmit a signal indicating that a corresponding function is not supported in a current state, to the NLP server 112.

In this case, the home appliance 200a may also make a request for voice data to the TTS server 113, receive the voice data from the TTS server 113, and output a voice guidance message indicating that a corresponding function is not supported in a current state.

In some embodiments, the voice server 110 may determine whether the determined voice command is supportable. For example, the NLP server 112 that analyzes intention of a user voice command may determine whether the determined voice command is supportable.

In this case, when the determined voice command includes a non-supportable command, the response signal based on the determined voice command transmitted by the NLP server 112 may be a signal indicating that the determined voice command is a function that is not supportable by the home appliance 200a.

According to an embodiment of the present invention, the voice server 110 and the voice recognition server system 100 including the same may organically connect and use servers for performing various functions for natural language voice processing.

The home appliance 200 may perform an operation up to receiving of a voice command, pre-processing of the voice command, and transmitting of the voice command to a server and the voice server 110 may perform a natural language processing procedure such as voice/text conversion, intention analysis, and command identification.

The voice server 110 may process a natural language to reduce burden of a central processing unit (CPU), a memory, and so on of an embedded module in the home appliance.

The link service server 120 may communicate with an external service and the home appliance control server 130 to perform an operation based on a user voice command.

The home appliance 200 may receive voice data including a sound source file from the voice server 110 and output a voice guidance message as audio to respond to a voice input of a user via audible feedback.

The home appliance 200 may receive a voice file from the voice server 110 via streaming and reproduce and output a voice guidance message to a user. Accordingly, the home appliance 200 does not inevitably store various sound source files.

The voice recognition server system 100 may be connected to various external services through the link service server 120 without collision with other servers. In addition, external information may be applied to enhance a success rate of intention analysis through an external service link server.

According to an embodiment of the present invention, the voice recognition server system 100 may ensure compatibility and connectivity through a plurality of servers and uses a last control command through the home appliance control server 130 to prevent collision between a voice recognition procedure and home appliance control via WiFi communication and collision between home appliance control through a portable terminal and home appliance control based on a voice input through the home appliance 200.

According to an embodiment of the present invention, the voice recognition server system 100 may be prevented from being dependent upon only one server to reduce load concentration on a specific server via organic connection between servers and, the servers have different functions and, thus, when a problem occurs in a specific server, it may be easy to respond to the problem via connection with other servers with the same function.

A plurality of servers may be independently updated frequently to advantageously enhance performance.

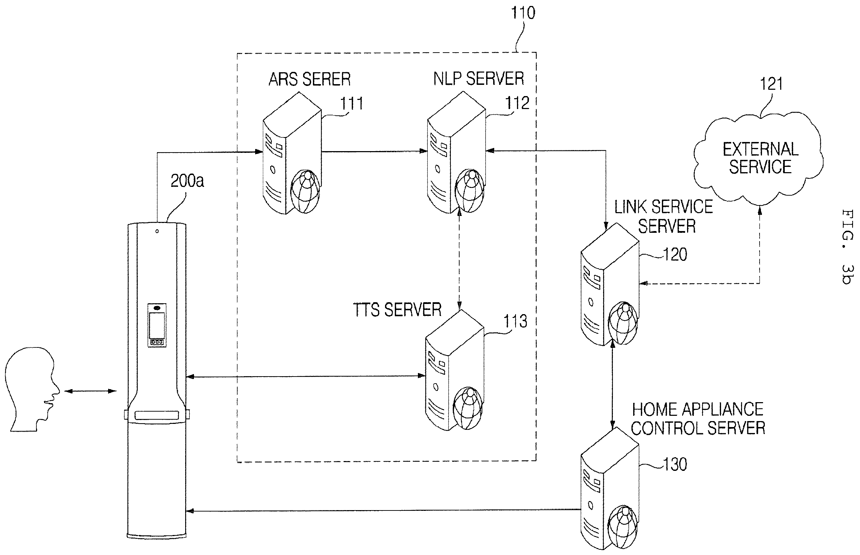

FIG. 3B is a diagram showing an example of a voice recognition server system according to an embodiment of the present invention.

The voice recognition server system illustrated in FIG. 3B may enhance a voice control response time by modifying the procedure of transmitting voice data for output of the voice guidance message by the voice recognition server system illustrated in FIG. 3A.

Accordingly, the voice recognition server systems shown in FIGS. 3A and 3B may perform an operation in materially the same way except for the above difference and, hereinafter, the same features are briefly described.

Referring to FIG. 3B, the voice recognition server system according to an embodiment of the present invention may include the voice server 110 that receives voice data from the home appliance 200a and analyzes the received voice data to identify a voice command.

The voice recognition server system according to an embodiment of the present invention may further include the link service server 120 that receives a signal corresponding to the determined voice command from the voice server 110 and generates a request signal corresponding to the determined voice command and the home appliance control server 130 that transmits a control signal based on the request signal received from the link service server 120 to the home appliance 200a.

In the voice recognition server system illustrated in FIG. 3B, the voice server 110 may transmit voice data including processing result information based on the voice command without a request of the home appliance 200a.

The voice server 110 may include the ASR server 111 that receives voice data from the home appliance 200a and converts the received voice data into text data, the NLP server 112 that receives the text data from the ASR server 111 and analyzes the received text data to determine a voice command, and the TTS server 113 that converts a response signal based on the voice command into voice data and transmit the voice data to the home appliance 200a.

According to the present embodiment, the home appliance control server 130 may also receive a response signal of the control signal from the home appliance 200a and transmit processing result information corresponding to the response signal to the link service server 120.

The link service server 120 may transmit the processing result information to the voice server 110, in more detail, to the NLP server 112.

In this case, the voice data that is transmitted to the home appliance 200a by the TTS server 113 may include the processing result information.

The link service server 120 may make a request for state information of the home appliance 200a to the home appliance control server based on a signal corresponding to the determined voice command and the home appliance control server may transmit the state information of the home appliance 200a to the link service server 120.

When it is possible to support the determined voice command based on the state information of the home appliance 200a, the link service server 120 may transmit a request signal corresponding to the determined voice command to the home appliance control server 130.

When it is not possible to support the determined voice command based on the state information of the home appliance 200a, the link service server 120 may transmit a signal indicating that a corresponding function is not supportable in a current state, to the voice server 110.

For example, the link service server 120 may transmit a signal indicating that a corresponding function is not supportable in a current state, to the NLP server 112.

The NLP server 112 may transmit a signal indicating that a corresponding function is not supported in a current state, to the TTS server 113, and the TTS server 113 may generate corresponding voice data and transmit the voice data to the home appliance 200a.

The home appliance 200a may receive voice data from the TTS server 113 and output a voice guidance message indicating that a corresponding function is not supported in a current state.

In some embodiments, the voice server 110 may determine whether the determined voice command is supportable. For example, the NLP server 112 that analyzes intention of a user voice command may determine whether the determined voice command is supportable.

In this case, when the determined voice command includes a non-supportable command, the response signal based on the determined voice command transmitted by the NLP server 112 may be a signal indicating that the determined voice command is a function that is not supportable by the home appliance 200a.

When the home appliance 200a performs an operation and, then, makes a request for guidance announcement of the corresponding operation to the TTS server 113 for last voice guidance, there may be a time difference between the operation and the guidance announcement.

However, according to an embodiment of the present invention, when intention is completely analyzed and an operation request is transmitted from the NLP server 112, information may be provided to the TTS server 113, simultaneously.

The TTS server 113 may provide guidance announcement to guidance announcement at a time point corresponding to a time point when the home appliance control server 130 issues a control command to the home appliance 200a.

Accordingly, the guidance announcement may be uttered simultaneously with or immediately after an operation of the home appliance 200a.

According to the present embodiment, the NLP server 112 and the TTS server 113 may be connected directly to each other and, thus, a time difference between the control command and the guidance announcement may be minimized through the home appliance control server 130.

Although FIGS. 3A and 3B illustrate the air conditioner 200a as the home appliance 200, the present invention is not limited thereto. For example, the home appliance 200 may correspond to the robot vacuum cleaner 200b, the refrigerator 200c, the washing machine 200d, the cooking device 200e, or the like other than the air conditioner 200a.

According to an aspect of the present invention, differently from FIGS. 3A and 3B, the ASR server 111, the NLP server 112, and the TTS server 113, for voice recognition and processing, may be configured as one integrated server.

In some embodiments, the link service server 120 and the home appliance control server 130 may be configured as one integrated server.

According to the present invention, a home appliance may be operated according to a voice input and, thus, a user does not inevitably manipulate a remote control device such as a remote controller, a portable terminal, or the like, thereby enhancing user convenience.

As described with reference to FIGS. 3A and 3B, according to the p resent invention, a natural language voice command of a user may be recognized using a plurality of servers and a corresponding control operation may be performed and, thus, system resources of a home appliance and each server may not be limited and a natural language may be effectively recognized and processed.

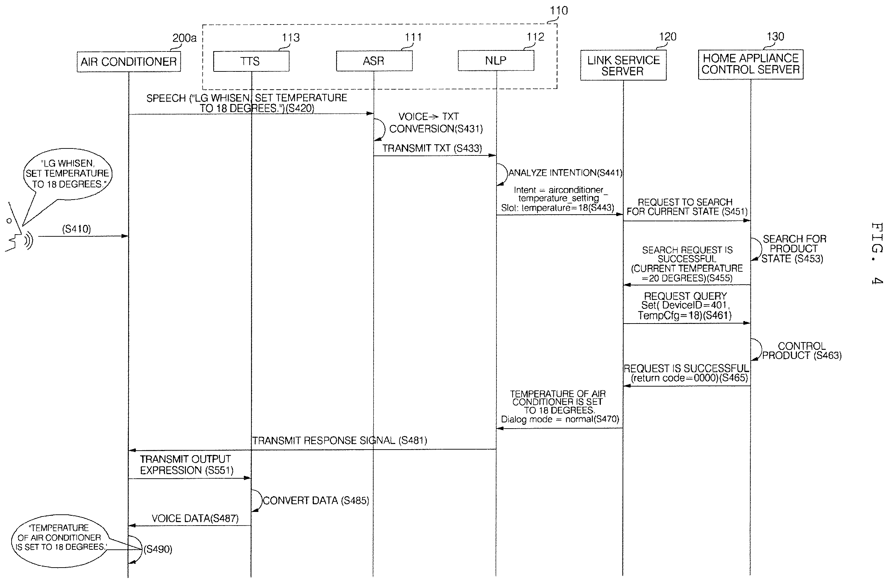

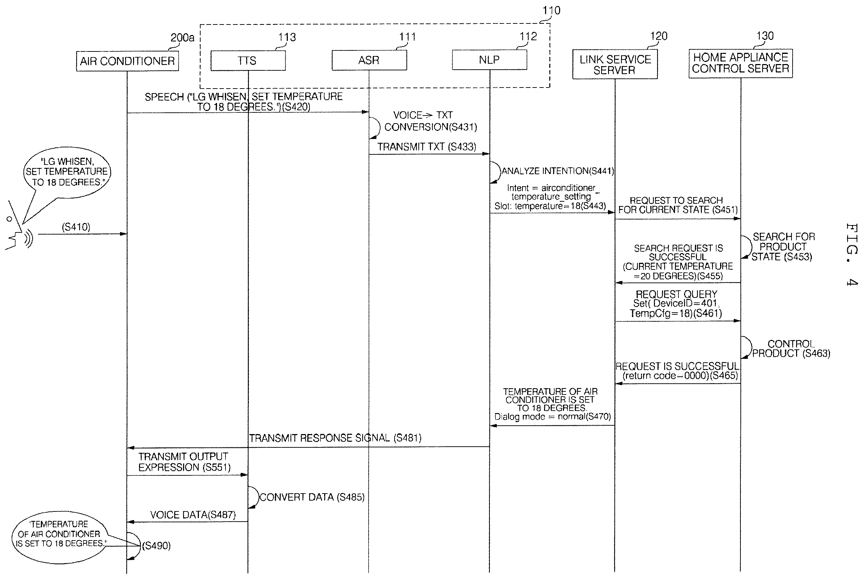

FIGS. 4 to 6 are diagrams showing signal flow of a voice recognition server system according to an embodiment of the present invention and illustrate signal flow of the voice recognition server system illustrated in FIG. 3A.

FIG. 4 illustrates signal flow in a normal situation in which a home appliance is operated according to a user voice command.

Hereinafter, the air conditioner 200a is described as the home appliance 200 but the present invention is not limited thereto.

Referring to FIG. 4, according to an embodiment of the present invention, the home appliance 200, e.g., the air conditioner 200a may receive a user voice command (S410) and transmit the received user voice command to the voice server 110 (S420).

For example, upon receiving a command for a change in temperature setting, e.g., "LG WHISEN, Set temperature to 18 degrees." from a user, the air conditioner 200a may convert the received voice command into digital voice data with predetermined format such as a wave file and transmit the digital voice data to the ASR server 111.

The air conditioner 200a may receive a wake-up signal including a call word and, then, transmit a voice command, which is input while being on standby to receive a command, to the voice server 110.

The air conditioner 200a may receive continuous voice inputs including a call word and a voice command. In this case, the air conditioner 200a may recognize the call word and transmit the voice command to the voice server 110.

A signal transmitted and received when devices in the system 10 communicate with each other may further include identification information of each device, a session value of a performed task, and the like as well as transmitted and received main data.

The ASR server 111 may recognize the received voice data and convert the voice data into text data (S431) and transmit the text data to the NLP server 112 (S433).

The NLP server 112 may perform natural language processing on the received text data to analyze and determine intention of the user voice command (S441).

For example, the NLP server 112 may determine a voice command with user intention indicating a change in setting temperature of the air conditioner 200a to 18 degrees from "LG WHISEN, Set temperature to 18 degrees.".

The NLP server 112 may transmit a signal corresponding to the determined voice command to the link service server 120 (S443).

When the link service server 120 makes a request for current state information of the air conditioner 200a to the home appliance control server 130 (S451), the home appliance control server 130 may search for the current state information of the air conditioner 200a (S453) and transmit the current state information of the air conditioner 200a to the link service server 120 (S455).

When the home appliance control server 130 does not have the current state information of the air conditioner 200a, the home appliance control server 130 may make a request the current state information to the air conditioner 200a and receive the current state information from the air conditioner 200a.

The link service server 120 that receives state information may transmit a request signal indicating a change in setting temperature of the corresponding air conditioner 200a to 18 degrees to the home appliance control server 130 according to the determined voice command (S461).

The home appliance control server 130 may generate a control signal and transmit the control signal to the air conditioner 200a based on the request signal to control the air conditioner 200a (S463).

The home appliance control server 130 may control the air conditioner 200a and, then, receive a response signal of the control signal from the home appliance and transmit processing result information indicating that an operation corresponding to the request is successful to the link service server 120 (S465).

The link service server 120 may transmit a signal corresponding to processing result information, for example, "Temperature of air conditioner is set to 18 degrees." to the NLP server 112 (S470) and the NLP server 112 may transmit a response signal based on the determined user voice command to the home appliance 200a (S481). Here, the response signal based on the determined user voice command may include the processing result information.

The home appliance 200a may transmit a signal including a text (output expression) corresponding to the response signal (S483), the TTS server 113 that receives the signal may convert the text included in the received signal into voice data (S485) and transmit the voice data to the home appliance 200a (S487).

The home appliance 200a may output a voice guidance message, for example, "Temperature of air conditioner is set to 18 degrees." based on the received voice data (S490).

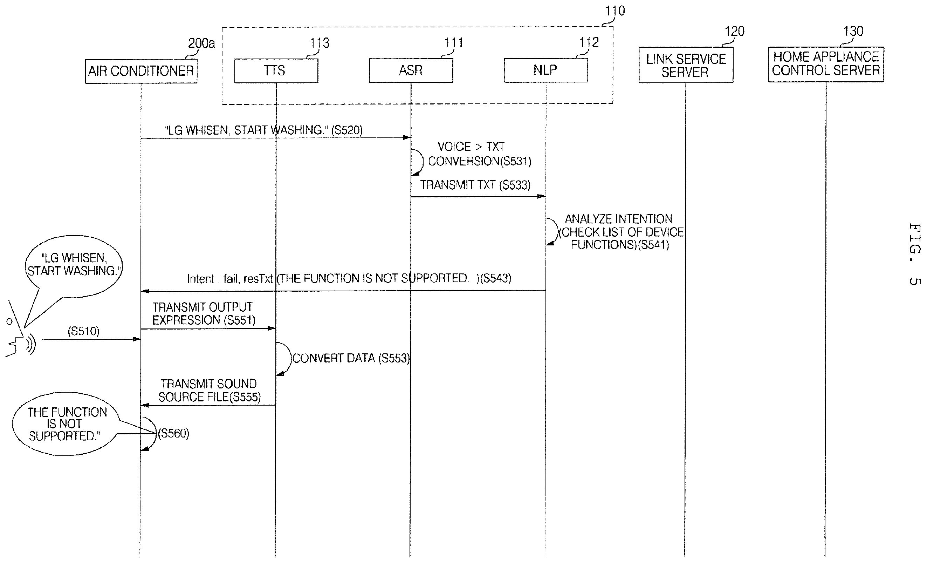

FIG. 5 is a diagram showing an example of signal flow when a non-supportable function of a corresponding home appliance is requested.

Referring to FIG. 5, according to an embodiment of the present invention, the air conditioner 200a may receive a user voice command of a washing function that is not supported by the air conditioner 200a, for example, "LG WHISEN, Start washing." (S510).

The air conditioner 200a may transmit the received user voice command to the voice server 110 (S520). The air conditioner 200a may convert the received voice command into digital voice data with predetermined format such as a wave file and transmit the digital voice data to the ASR server 111.

The ASR server 111 may recognize the received voice data and convert the voice data into text data (S531) and transmit the text data to the NLP server 112 (S533).

The NLP server 112 may perform natural language processing on the received text data to analyze and determine intention of the user voice command (S541).

The NLP server 112 may determine whether the determined voice command is supportable. According to the present embodiment, the NLP server 112 may determine that a user makes a request for a washing function that is not supported by the air conditioner 200a.

Then, the NLP server 112 may transmit a response signal indicating that the determined voice command is a function that is not supported by the home appliance, to the air conditioner 200a (S543).

The home appliance 200a may transmit a signal including a text (output expression) corresponding to the response signal (S551), the TTS server 113 that receives the signal may convert the text included in the received signal into voice data (S553 and transmit the voice data to the home appliance 200a (S555).

The home appliance 200a may output a voice guidance message, for example, "The function is not supported." based on the received voice data (S560).

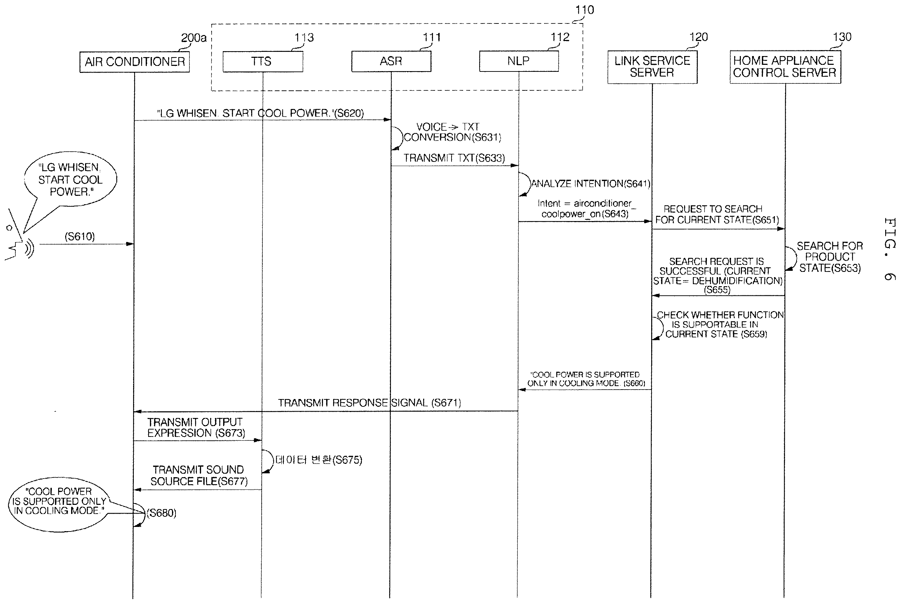

FIG. 6 is a diagram showing an example of signal flow when a non-supportable function of a corresponding home appliance in a current operation mode is requested.

Referring to FIG. 6, according to an embodiment of the present invention, the air conditioner 200a may receive a user voice command indicating specific mode driving of the air conditioner 200a, for example, "LG WHISEN, Start cool power." (S610).

The air conditioner 200a may transmit the received user voice command to the voice server 110 (S620). The air conditioner 200a may convert the received voice command into digital voice data with predetermined format such as a wave file and transmit the digital voice data to the ASR server 111.

The ASR server 111 may recognize the received voice data and convert the voice data into text data (S631) and transmit the text data to the NLP server 112 (S633).

The NLP server 112 may perform natural language processing on the received text data to analyze and determine intention of the user voice command (S641).

For example, the NLP server 112 may determine a voice command with user intention indicating that the air conditioner 200a is driven in a cool power mode from "LG WHISEN, Start cool power.".

The NLP server 112 may transmit a signal corresponding to the determined voice command to the link service server 120 (S643).

When the link service server 120 makes a request for current state information of the air conditioner 200a to the home appliance control server 130 (S651), the home appliance control server 130 may search for the current state information of the air conditioner 200a (S653) and transmit the current state information of the air conditioner 200a to the link service server 120 (S655).

When the home appliance control server 130 does not have the current state information of the air conditioner 200a, the home appliance control server 130 may make a request the current state information to the air conditioner 200a and receive the current state information from the air conditioner 200a.

The link service server 120 that receives state information may determine whether the determined voice command is supportable based on the current state information of the air conditioner 200a (S657). For example, when the air conditioner 200a is currently driven in a dehumidification mode and a cool power mode is supported only in a cooling mode, the NLP server 112 may determine that a user makes a request for a cool power mode that is not supported in a current state.

Then, the link service server 120 may transmit a response signal indicating that the determined voice command is a function that is not supported by the home appliance 200a in a current state, to the NLP server 112 (S660).

In addition, the NLP server 112 may transmit a response signal indicating that the determined voice command is a function that is not supported in a current state, to the home appliance 200a (S671).

The home appliance 200a may transmit a signal including a text (output expression) corresponding to the response signal (S673) and the TTS server 113 that receives the signal may convert the text included in the received signal into voice data (S675) and transmit the voice data to the home appliance 200a (S677).

The home appliance 200a may output a voice guidance message such as "Cool power is supported only in cooling mode." based on the received voice data (S680).

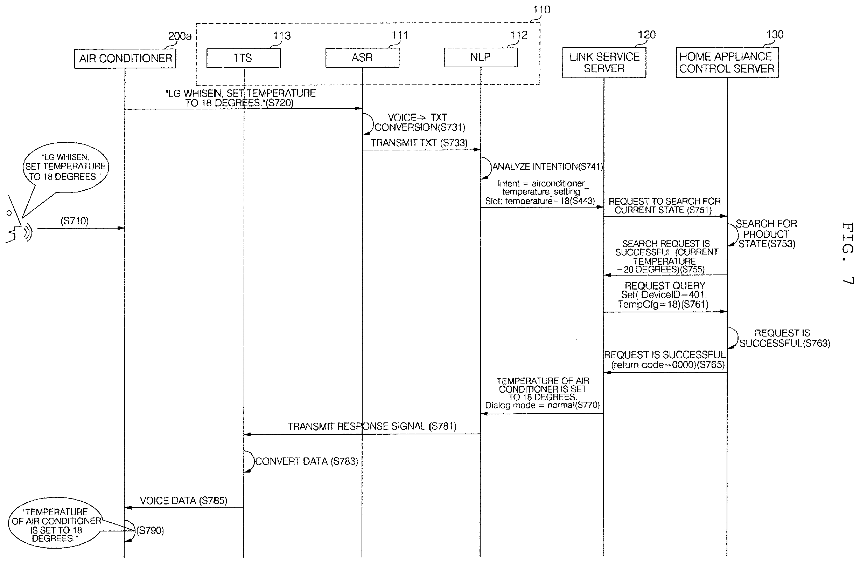

FIGS. 7 to 9 are diagrams showing an example of signal flow of a voice recognition server system according to an embodiment of the present invention and illustrate signal flow of the voice recognition server system illustrated in FIG. 3B.

FIG. 7 illustrates signal flow in a normal situation in which a home appliance is operated according to a user voice command.

Referring to FIG. 7, according to an embodiment of the present invention, the home appliance 200, e.g., the air conditioner 200a may receive a user voice command (S710) and transmit the received user voice command to the voice server 110 (S720).

The ASR server 111 may recognize the received voice data and convert the voice data into text data (S731) and transmit the text data to the NLP server 112 (S733).

The NLP server 112 may perform natural language processing on the received text data to analyze and determine intention of the user voice command (S741).

For example, the NLP server 112 may determine a voice command with user intention indicating a change in setting temperature of the air conditioner 200a to 18 degrees from "LG WHISEN, Set temperature to 18 degrees.".

The NLP server 112 may transmit a signal corresponding to the determined voice command to the link service server 120 (S743).

When the link service server 120 makes a request for current state information of the air conditioner 200a to the home appliance control server 130 (S751), the home appliance control server 130 may search for the current state information of the air conditioner 200a (S753) and transmit the current state information of the air conditioner 200a to the link service server 120 (S755).

When the home appliance control server 130 does not have the current state information of the air conditioner 200a, the home appliance control server 130 may make a request the current state information to the air conditioner 200a and receive the current state information from the air conditioner 200a.

The link service server 120 that receives state information may transmit a request signal indicating a change in setting temperature of the corresponding air conditioner 200a to 18 degrees to the home appliance control server 130 according to the determined voice command (S761).

The home appliance control server 130 may generate a control signal and transmit the control signal to the air conditioner 200a based on the request signal to control the air conditioner 200a (S763).

The home appliance control server 130 may control the air conditioner 200a and, then, receive a response signal of the control signal from the home appliance and transmit processing result information indicating that an operation corresponding to the request is successful to the link service server 120 (S765).

The link service server 120 may transmit a signal corresponding to processing result information, for example, "Temperature of air conditioner is set to 18 degrees." to the NLP server 112 (S770).

The NLP server 112 may transmit a response signal based on the determined user voice command to the TTS server 113 (S781). Here, the response signal based on the determined user voice command may include the processing result information.

The TTS server 113 may convert the response signal based on the voice command into voice data (S783) and transmit the voice data to the home appliance 200a (S785).

The home appliance 200a may output a voice guidance message such as "Temperature of air conditioner is set to 18 degrees." based on the received voice data (S790).

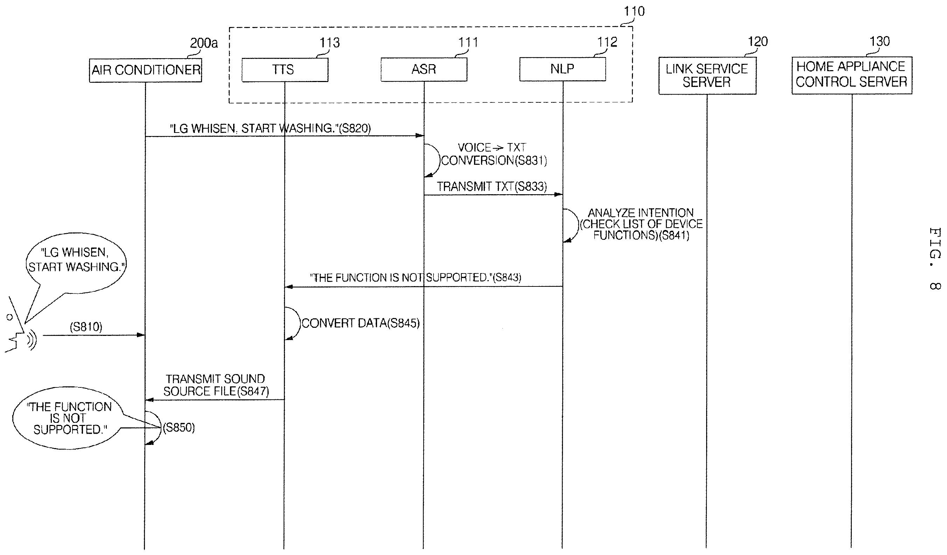

FIG. 8 is a diagram showing an example of signal flow when a non-supportable function of a corresponding home appliance is requested.

Referring to FIG. 8, according to an embodiment of the present invention, the air conditioner 200a may receive a user voice command of a washing function that is not supported by the air conditioner 200a, for example, "LG WHISEN, Start washing." (S810).

The air conditioner 200a may transmit the received user voice command to the voice server 110 (S820). The air conditioner 200a may convert the received voice command into digital voice data with predetermined format such as a wave file and transmit the digital voice data to the ASR server 111.

The ASR server 111 may recognize the received voice data and convert the voice data into text data (S831) and transmit the text data to the NLP server 112 (S833).

The NLP server 112 may perform natural language processing on the received text data to analyze and determine intention of the user voice command (S841).

The NLP server 112 may determine whether the determined voice command is supportable. According to the present embodiment, the NLP server 112 may determine that a user makes a request for a washing function that is not supported by the air conditioner 200a.

Then, the NLP server 112 may transmit a response signal indicating that the determined voice command is a function that is not supported by the home appliance, to the TTS server 113 (S843).

The TTS server 113 may convert a response signal based on the voice command into voice data (S845) and transmit the voice data to the home appliance 200a (S847).

The home appliance 200a may output a voice guidance message such as "The function is not supported." based on the received voice data (S850).

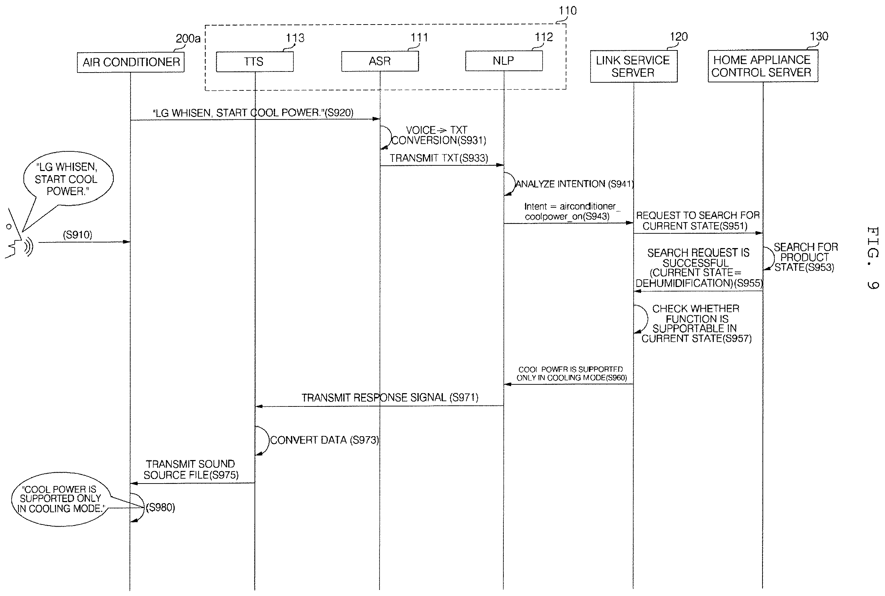

FIG. 9 is a diagram showing an example of signal flow when a non-supportable function of a corresponding home appliance in a current operation mode is requested.

Referring to FIG. 9, according to an embodiment of the present invention, the air conditioner 200a may receive a user voice command indicating specific mode driving of the air conditioner 200a such as "LG WHISEN, Start cool power." (S910).

The air conditioner 200a may transmit the received user voice command to the voice server 110 (S920). The air conditioner 200a may convert the received voice command into digital voice data with predetermined format such as a wave file and transmit the digital voice data to the ASR server 111.

The ASR server 111 may recognize the received voice data and convert the voice data into text data (S931) and transmit the text data to the NLP server 112 (S933).

The NLP server 112 may perform natural language processing on the received text data to analyze and determine intention of the user voice command (S941).

For example, the NLP server 112 may determine a voice command with user intention indicating that the air conditioner 200a is driven in a cool power mode from "LG WHISEN, Start cool power.".

The NLP server 112 may transmit a signal corresponding to the determined voice command to the link service server 120 (S943).

When the link service server 120 makes a request for current state information of the air conditioner 200a to the home appliance control server 130 (S951), the home appliance control server 130 may search for the current state information of the air conditioner 200a (S953) and transmit the current state information of the air conditioner 200a to the link service server 120 (S955).

When the home appliance control server 130does not have the current state information of the air conditioner 200a, the home appliance control server 130 may make a request the current state information to the air conditioner 200a and receive the current state information from the air conditioner 200a.

The link service server 120 that receives state information may determine whether the determined voice command is supportable based on the current state information of the air conditioner 200a (S957). For example, when the air conditioner 200a is currently driven in a dehumidification mode and a cool power mode is supported only in a cooling mode, the NLP server 112 may determine that a user makes a request for a cool power mode that is not supported in a current state.

Then, the link service server 120 may transmit a response signal indicating that the determined voice command is a function that is not supported by the home appliance 200a in a current state, to the NLP server 112 (S960).

In addition, the NLP server 112 may transmit a response signal indicating that the determined voice command is a function that is not supported in a current state, to the TTS server 113 (S971).

The TTS server 113 may convert a response signal base on the voice command into voice data (S973) and transmit the voice data to the home appliance 200a (S975).

The home appliance 200a may output a voice guidance message such as "Cool power is supported only in cooling mode." based on the received voice data (S980).

The present invention may realize user experience of providing appropriate voice guidance with respect to cases in which a user command is not understood or a corresponding function is not supportable.

Guidance announcement appropriate for each situation generated during command processing and a time point thereof may be provided to minimize user inconvenience.

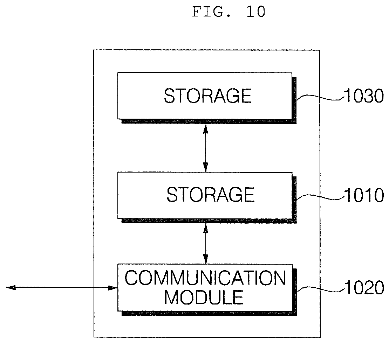

FIG. 10 is an internal block diagram showing an example of a server according to an embodiment of the present invention. The server may be the ASR server 111, the NLP server 112, the TTS server 113, the link service server 120, or the home appliance control server 130.

Referring to FIG. 10, the server may include a communication module 1020, a storage 1030, and a processor 1010.

The processor 1010 may control an overall operation of the server.

The communication module 1020 may receive various data such as state information, operation information, manipulation information, voice data, and character data from other servers or a home appliance such as a portable terminal and an air conditioner.

The communication module 1020 may transmit data corresponding to various received pieces of information to other servers or a home appliance such as a portable terminal and an air conditioner without being changed or after being processed in a predetermined way.

To this end, the communication module 1020 may include one or more communication modules such as an Internet module and a mobile communication module.

The storage 1030 may store received information and include data for generating result information corresponding thereto.

The storage 1030 may store data for an operation of a corresponding server. For example, the storage 1030 may store an automatic speech recognition (ASR) algorithm or the like in the case of the ASR server 111 and store product information and state information of a home appliance and data for control of the home appliance in the case of the home appliance control server 130.

The server may be a server managed by a manufacturing company of a home appliance such as an air conditioner or a server managed by a service provider and may be a kind of Cloud server.

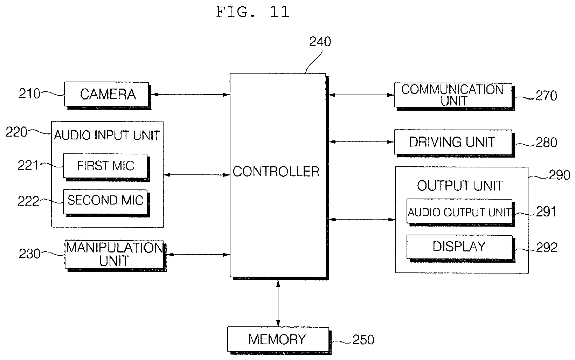

FIG. 11 is an internal block diagram showing an example of a home appliance according to an embodiment of the present invention.

Referring to FIG. 11, according to an embodiment of the present invention, the home appliance 200 may include an audio input unit 220 for receiving a user voice command, a memory 250 for storing various data, a communication unit 270 that wirelessly communicates with other electronic devices, a driving unit 280 for performing an operation implemented by each home appliance, an output unit 290 for displaying predetermined information as an image or outputting information audio, and a controller 240 for controlling an overall operation.

The audio input unit 220 may receive an external audio signal and a user voice command. To this end, the audio input unit 220 may include one or more microphones (MICs). To more accurately receive a user voice command, the audio input unit 220 may include a plurality of MICs 221 and 222. The plurality of MICs 221 and 222 may be arranged at different places and may acquire an external audio signal to process the signal as an electrical signal.

Although FIG. 11, etc. illustrate an example in which the audio input unit 220 includes two MICs of a first MIC 221 and a second MIC 222, the present invention is not limited thereto.

The audio input unit 220 may include a processor for converting analog sound into digital data or may be connected to a processor and may make an input user voice command in the form of data to be recognized by the controller 240 or a predetermined server.

The audio input unit 220 may use various noise removal algorithms for removing noise generated during a procedure of receiving a user voice command.

The audio input unit 220 may include components for audio signal processing, such as a filter for removing noise from an audio signal received by each of the MICs 221 and 222 and an amplifier for amplifying and outputting a signal output from the filter.

The memory 250 may record various pieces of information required for an operation of a home appliance and include a volatile or non-volatile medium. A recording medium may store data to be read by a micro processor and may include a hard disk drive (HDD), a solid state disk (SSD), a silicon disk drive (SDD), a read only memory (ROM), a random access memory (RAM), a CD-ROM, a magnetic tape, a floppy disk, an optical data storage device, and so on.

The memory 250 may store data for voice recognition and the controller 240 may process a user voice command received through the audio input unit 220 and perform a voice recognition procedure.

Simple voice recognition may be performed by the home appliance 200 and a high-level such as natural language processing may be performed by the voice recognition server system 100.

For example, upon receiving a wake-up voice signal including a predetermined call word, the home appliance 200 may be converted into a state for receiving a voice command. In this case, the home appliance 200 may perform only a voice recognition procedure up to determination of whether call word voice is input and voice recognition of a next user voice input may be performed by the voice recognition server system 100.

There is a limit in a system resource of a home appliance and, thus, a complex natural language may be recognized and processed by the voice recognition server system 100.

The memory 250 may store limited data. For example, the memory 250 may restore data for recognizing a wake-up voice signal including a predetermined call word. In this case, the controller 240 may recognize a wake-up voice signal including a predetermined call word from a user voice input signal received through the audio input unit 220.

The call word may be set by a manufacturer or different call words may be set for respective home appliances. For example, a call word in the case of an air conditioner may be set to "LG WHISEN" and a call word in the case of a refrigerator may be set to "LG DIOS".

Setting of the call word may be changed by a user.

The controller 240 may control the communication unit 270 to transmit a user voice command that is input after a wake-up voice signal is recognized to the voice recognition server system 100 through the communication unit 270.

The communication unit 270 may include one or more communication modules to wirelessly communicate with other electronic devices to transmit and receive various signals. For example, the communication unit 270 may communicate with electronic device inside/outside the smart home system 10.

The communication unit 270 may communicate with the AP device 300 and access a wireless Internet network through the AP device 300 to communicate with other devices.

The controller 240 may transmit state information of the home appliance 200, a user voice command, or the like to the voice recognition server system 100 or the like through the communication unit 270.

Upon receiving a control signal through the communication unit 270, the controller 240 may control the home appliance 200 to be operated according to the received control signal.

The output unit 290 may include a display 292 for displaying information corresponding to a user command input, a processing result corresponding to the user command input, an operation mode, an operation state, an error state, or the like in the form of an image.

In some embodiments, the display 292 may be configured as a touchscreen that is configured as an interlayer structure with a touchpad. In this case, the display 292 may also be used as an input device to which information is capable of being input via a user touch as well as an output device.

The output unit 290 may further include an audio output unit 291 for outputting an audio signal. The audio output unit 291 may output a notification message such as warning sound, an operation mode, an operation state, and an error state, information corresponding to a user command input, a processing result corresponding to a user command input, or the like in the form of audio under control of the controller 240. The audio output unit 291 may convert an electrical signal from the controller 240 into an audio signal and output the audio signal. To this end, the audio output unit 291 may include a speaker or the like.

The driving unit 280 may perform an operation implemented by a home appliance and may be differently configured for respective home appliances.

For example, when a home appliance is a refrigerator, the driving unit 280 may include refrigerating chamber driving unit for operating a refrigerating chamber fan for supplying cooled air to a refrigerating chamber, a freezing chamber driving unit for operating a freezing chamber fan for supplying cooled air to a freezing chamber, a compressor driving unit for operating a compressor for compressing a refrigerant, and so on.

As another example, when a home appliance is a washing machine, the driving unit 280 may include a driving unit for driving a drum or a tub.

As another example, when a home appliance is an air conditioner, the driving unit 280 may include a compressor driving unit for driving a compressor in an outdoor unit of the air conditioner, an outdoor fan driving unit for operating an outdoor fan for heat exchange, an indoor fan driving unit for operating an indoor fan for heat exchange, and so on.

As another example, when a home appliance is a cooking device, the driving unit 280 may include a microwave driving unit for outputting a micro wave into a cavity, and so on.

As another example, when a home appliance is a vacuum cleaner, the driving unit 280 may include a fan motor driving unit for air intake, and so on.

The home appliance 200 may further include a manipulation unit 230 for a user input and a camera 210 for photographing a predetermined range around the home appliance 200.

The manipulation unit 230 may include a plurality of manipulation buttons and transmit a signal corresponding to an input button to the controller 240.

The camera 210 may photograph surrounding and external environments of the home appliance 200 and a plurality of cameras may be installed at respective parts for photographing efficiency.

For example, the camera 210 may include an image sensor (e.g., a CMOS image sensor) including at least one optical lens and a plurality of photodiodes (e.g., a pixel) on which an image is formed via light transmitted through the optical lens, and a digital signal processor for configuring an image based on a signal output from the photodiodes. The digital signal processor may generate a video image including frames configured with still images as well as a still image.

An image captured by the camera 210 may be stored in the memory 250.

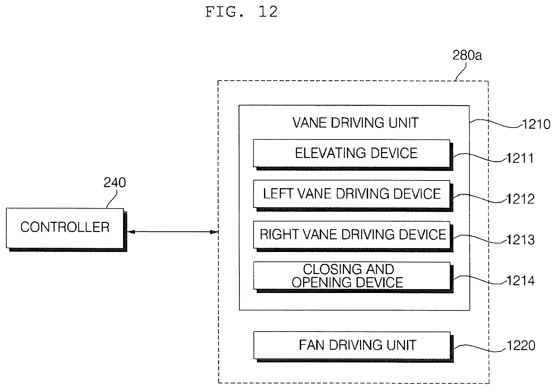

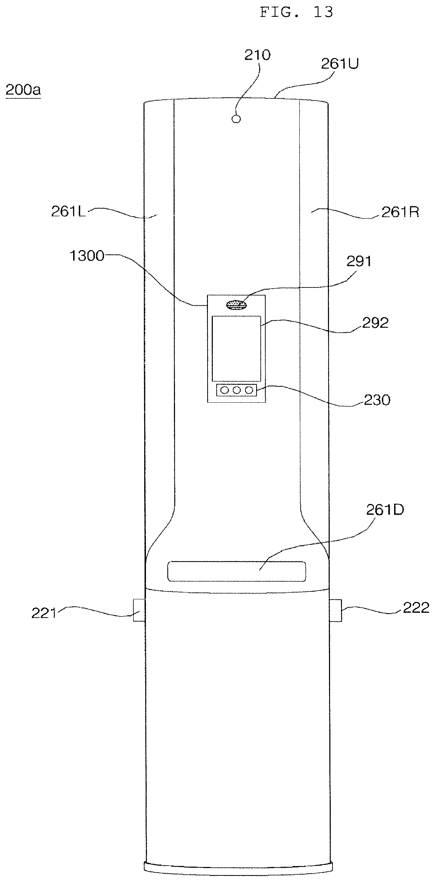

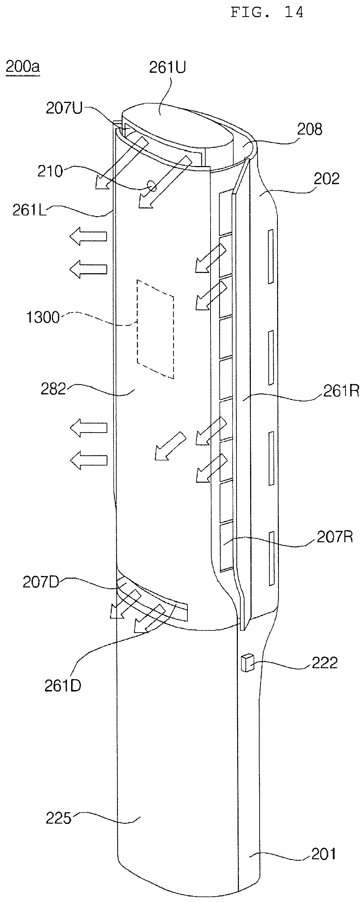

FIG. 12 is an internal diagram showing a portion of an air conditioner according to an embodiment of the present invention. FIGS. 13 and 14 are schematic diagrams showing an outer appearance of an air conditioner according to an embodiment of the present invention.

In more detail, FIG. 12 illustrates a vane driving unit 1210 and a fan driving unit 1220 included in a driving unit 280a of the air conditioner 200a when the home appliance illustrated in FIG. 11 is the air conditioner 200a illustrated in FIGS. 13 and 14.

FIGS. 13 and 14 are schematic diagrams showing an outer appearance of an indoor unit of an air conditioner according to an embodiment of the present invention.

Referring to FIGS. 11 to 14, according to an embodiment of the present invention, the air conditioner 200a may include the MICs 221 and 222 for receiving a user voice command, the communication unit 270 for wirelessly communicating with other electronic devices, the controller 240 for controlling an overall operation, and the vane driving unit 1210 for driving a vane under control of the controller 240.

According to an embodiment of the present invention, the air conditioner 200a may further include the fan driving unit 1220 for driving a fan under control of the controller 240.

The MICs 221 and 222 may receive an external audio signal and a user voice command. The MICs 221 and 222 may acquire an external audio signal and a user voice command and process them to an electrical signal.

In the present embodiment, the air conditioner 200a may include a suction body 202 with an air suction port (not shown) formed therein, a heat exchanger (not shown) through which air absorbed into the air suction port, a fan (not shown) for absorbing air into the air suction port and allowing the air to be transmitted through the heat exchanger, and discharge ports 207R, 207U, and 207D formed to re-discharge air indoors.

A wind direction adjuster such as a louver (not shown) and/or vanes 261R, 261L, 261U, and 261D, for closing and opening a discharge port 190 and adjusting a wind direction of discharged air may be arranged in the discharge ports 207R, 207U, and 207D and, in this regard, a motor or the like may be driven under control of the controller 240 to change an angle and direction of the wind direction adjuster. Accordingly, a wind direction of air discharged through the discharge ports 207R, 207U, and 207D may be adjusted. An operation of the wind direction adjuster may be controlled to adjust a wind direction, a wind range, or the like of air flow.

For example, the vanes 261R, 261L, 261U, and 261D may be fixed toward one direction to blow in one direction or a direction of a vane may be continuously changed within a predetermined range (hereinafter, "swing operation") and, thus, air blowing may be performed in a predetermined range while a wind direction is continuously changed in a predetermined range. In addition, an angle range in which a swing operation of the vanes 261R, 261L, 261U, and 261D is performed may be adjusted to slightly narrow and widen the range in which air blowing is performed.

A fan for control of a flow in which inside air absorbed into a suction port is discharged to an indoor space through the discharge ports 207R, 207U, and 207D may be installed in the air conditioner, rotation of the fan may be adjusted by the fan driving unit 1220, and an operation of the fan driving unit 1220 may be controlled by the controller 240.

Accordingly, the controller 240 may control the vane driving unit 1210 and the fan driving unit 1220 to adjust a direction of air flow of air discharged from the air conditioner 200a. The controller 240 may control speed of a fan motor to control the amount and speed of air flow and control a wind direction adjuster such as a louver an a vane to control a direction of air flow.

The air conditioner may include the plurality of vanes 261R, 261L, 261U, and 261D. At least some of the vanes 261R, 261L, 261U, and 261D may be operated using different methods.

For example, an upper vane 261U may be arranged at an upper portion of a fan to be elevated and may be elevated and driven while being operated. To this end, the air conditioner 200a may include an elevating device 1211 for elevating the upper vane 261U.

The upper vane 261U may be elevated to function as an upper discharge body for discharging indoors at least some of air blown from the fan through an air discharge port 207U.

The suction body 202 may be installed above a base 201. The suction body 202 may form an outer appearance of the air conditioner along with the base 201 at a rear side. The suction body 202 may form an upper outer appearance of the air conditioner at a rear side. The suction body 202 may configure a rear case of the air conditioner along with the base 201, the suction body 202 may be a rear upper case of the air conditioner, and the base 201 may be a rear lower case of the air conditioner.

The controller 240 for control of various electrical components of the air conditioner may be installed on the base 201. Here, various electrical components of the air conditioner may include a fan or the like. A case cover 225 disposed in front of the base 201 may be installed on the base 201.

The air conditioner may further include a cleaning unit (not shown) for cleaning air. The cleaning unit may be disposed in the suction body 202. The cleaning unit may be arranged before the heat exchanger in a direction in which air flows. The cleaning unit may be arranged between the suction body 202 and the heat exchanger and may be arranged behind the suction body 202. The cleaning unit may include a filter through which impurities in air are filtered. The cleaning unit may include an ion generator for generating ions in air. The cleaning unit may include an electric precipitator for discharging impurities in air to collect dust. The cleaning unit may include at least one of a filter, an ion generator, and an electric precipitator.

The heat exchanger may be positioned in front of the air suction port. The heat exchanger may exchange heat between air absorbed to the air suction port and a refrigerant. The heat exchanger may be installed to be positioned between the air suction port and the fan.

The air conditioner may be configured in such a way that a refrigerant at low temperature and low pressure is transmitted through the heat exchanger and the heat exchanger cools air transmitted through the air suction port while a compressor installed in an outdoor unit is driven. When the compressor is turned on, the heat exchanger may exchange heat between the refrigerant and air to cool air and the air conditioner may function as a cooler.

The fan may be positioned in front of the heat exchanger. The fan may include a radial flow fan that absorbs rear air and blows air in any one of up, down, right, and left directions. The fan may include a sirocco fan. The fan may include a sirocco fan that blows air in four directions of up, down, right, and left directions.

The fan may include a plurality of blowing fans. The plurality of blowing fans may be sequentially arranged in up and down directions. The plurality of blowing fans may each include a sirocco fan.

The upper front air discharge port 207U may be formed in a front surface of the upper vane 261U. An air inlet (not shown) into which air blown in an upward direction is introduced from the fan may be formed in a bottom surface of the upper vane 261U. The upper vane 261U may guide air that is blown in an upward direction from an internal fan, in a front direction.

The upper vane 261U may be disposed at an upper portion of the fan to be elevated. When the upper vane 261U is elevated, the upper front air discharge port 207U may be elevated to discharge air and, when the upper vane 261U is lowered, the upper front air discharge port 207U may be hidden.

The air conditioner may further include an elevating guide 208 for guiding elevating of the upper vane 261U. The elevating guide 208 may be installed to be positioned above the fan and the heat exchanger. When the upper vane 261U is elevated, the upper front air discharge port 207U is positioned above the elevating guide 208 to discharge air and, when the upper vane 261U is lowered, the upper front air discharge port 207U may be positioned in the elevating guide 208 and may be hidden.

The elevating device 1211 may include a driving source such as a motor and a power train member for elevating the upper vane 261U when the driving source is driven. The power train member may include a pinion installed in the driving source and a rack engaged with the pinion.

The elevating device 1211 may be elevated to different heights according to a driving mode. The controller 240 may control the elevating device 1211 according to driving mode selection of a user.

For example, the controller 240 may elevate the upper vane 261U to a maximum open height to which the upper front air discharge port 207U is open by a maximum degree or elevate the upper vane 261U to a height to which only a portion of the upper front air discharge port 207U is open, according to a driving mode.

A side air discharge port 207R through which air blown in a lateral direction from the fan is transmitted may be formed in a lateral surface of the air conditioner 200a.

Side vanes 261R and 261L for adjusting a wind direction of air blown in a lateral direction from the fan and for closing and opening left and right air discharge ports 207R may be arranged in a lateral surface of the air conditioner. The side vanes 261R and 261L may include a left vane 261L and a right vane 261R.

The side vanes 261R and 261L may be rotatably installed. The air conditioner may include side vane driving devices 1212 and 1213 for rotating the side vanes 261R and 261L. The side vane driving devices 1212 and 1213 may include a left vane driving device 1212 and a right vane driving device 1213.

The side vane driving devices 1212 and 1213 may include a driving source such as a motor. The side vane driving devices 1212 and 1213 may include at least one of power train members such as a link or gear for rotating the side vanes 261R and 261L while being connected to a driving source to drive the driving source.

The side vane driving devices 1212 and 1213 may be controlled in an open mode by the controller 240 during a cooling operation. The side vane driving devices 1212 and 1213 may rotate the left vane 261L and the right vane 261R at a predetermined opening angle under control of the controller 240.

Accordingly, a wind direction may be controlled or a swing operation may be performed to continuously change a wind direction in a predetermined range and, thus, air blowing may be performed in the predetermined range. An angle range in which the swing operation is performed may be adjusted to further narrow or widen a range in which air blowing is performed.

The air conditioner may further include a lower vane 261D that is positioned at a lower portion and in which a lower front air discharge port 207D is formed.

The lower vane 261D may discharge air blown in a downward direction from the fan, in a forward direction. A flow channel through which air is transmitted may be formed in the lower vane 261D. The lower front air discharge port 207D that discharges air outdoors may be formed in a front surface of the lower vane 261D.

The air conditioner may further include a closing and opening device 1214 for closing and opening the lower front air discharge port 207D. The closing and opening device 1214 may include a moving kit (not shown) for moving the lower vane 261D to close and open the lower front air discharge port 207D. The moving kit may include a driving source such as a motor, a moving kit carrier on which the moving kit is accommodated, and at least one power train member for advance and retreat of the moving kit carrier when the driving source is driven.

The lower vane 261D may be advanced to shield the lower front air discharge port 207D and retreated to open the lower front air discharge port 207D.

The closing and opening device 1214 may be controlled in an open mode in which the lower front air discharge port 207D is open while being driven in a predetermined mode.

The air conditioner may further include an air blower cover 282 that is disposed in front of the fan and the air blower cover 282 may form a front and upper outer appearance of the air conditioner. The air blower cover 282 may be positioned above the case cover 225 and may form a front outer appearance of the air conditioner along with the case cover 225. The air blower cover 282 may configure a front cover of the air conditioner along with the case cover 225. The air blower cover 282 may be a front upper cover of the air conditioner and the case cover 225 may be a front lower cover of the air conditioner.

The display 292 for displaying various pieces of information may be installed in the air conditioner. The air conditioner may further include the audio output unit 291 for output of an audio signal and a spear of the audio output unit 291 may be arranged on a front surface of the air conditioner or arranged at an appropriate place.

The air conditioner may include the manipulation unit 230 including a plurality of buttons to which various commands are input and the camera 210 for photographing a predetermine range around the home appliance 200.

According to an aspect of the present invention, a front panel 1300 may be arranged on a front surface of the air blower cover 282 or the case cover 225, and the display 292, a speaker of the audio output unit 291, and manipulation buttons of the manipulation unit 230 may be arranged on the front panel 1300.

The air conditioner may be driven according to a plurality of driving modes. The controller 240 may control the vane driving unit 1210, the fan driving unit 1220, and so on according to a selected driving mode.

For example, the controller 240 may control the plurality of vanes 261R, 261L, 261U, and 261D to entirely open a discharge port in a predetermined driving mode.

Alternatively, the controller 240 may control a specific vane to close the discharge port instead of opening the discharge port in a predetermined operating mode. For example, the controller 240 may control the lower vane 261D to be closed in a predetermined driving mode.

The controller 240 may adjust an elevating height of the upper vane 261U and an opening angle of left/right vanes 261R and 261L according to a driving mode.

The controller 240 may control rotation speed of the fan to adjust a wind direction according to a driving mode.

An outer appearance and structure of the air conditioner illustrated in FIGS. 13 and 14 are exemplary but the present invention is not limited thereto. For example, the positions, number, structure, etc. of the MICs 221 and 222, the camera 210, the audio output unit 291, and the vanes 261R, 261L, 261U, and 261D may be changed according to design specifications.

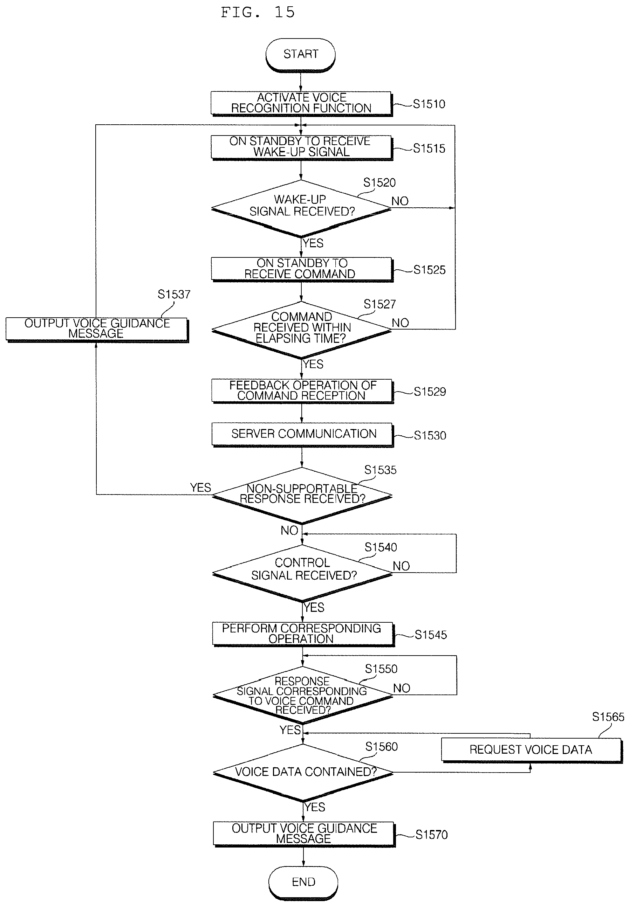

FIG. 15 is a flowchart showing a method of operating a home appliance according to an embodiment of the present invention.

Referring to FIG. 15, the home appliance 200 may activate a voice recognition function according to a user input (S1510). The controller 240 of the home appliance 200 may activate the MICs 221 and 222 according to a user input.

The home appliance 200 may automatically activate the voice recognition function according to setting of activation of the voice recognition function.

For example, when being powered on, the home appliance 200 may automatically activate the MICs 221 and 222 to activate the voice recognition function.

When the MICs 221 and 222 of the home appliance are activated, upon receiving a voice input from a user, the MICs 221 and 222 may receive input voice and transmit the input voice to the controller 240.

The home appliance 200 may enter a wake-up signal standby mode for input of a wake-up voice signal including a predetermined call word (S1515).

Upon receiving the wake-up voice signal including a predetermined call word through the MICs 221 and 222 (S1520), the home appliance 200 may be converted into a command standby mode for receiving a voice command (S1525).

When the home appliance 200 is always on standby to receive a natural language command, this may result in a burden to power and CPU usage consumed by a voice recognition function, and a server of a voice recognition server system.

Accordingly, the home appliance 200 may transmit only a voice signal entered in a command standby state, to a server.

The home appliance 200 may apply a condition in a time period of being on standby to receive a command, receive sound, and transmit the sound to a server up to a time point in which a command is completed during command input within the time period.

According to an aspect of the present invention, the home appliance 200 may perform only a voice recognition procedure up to determination of whether call word voice is input and voice recognition of a next user voice input may be performed by the voice recognition server system 100.

The call word may be set by a manufacturer and different call words may be set for respective home appliances. For example, a call word in the case of an air conditioner may be set to "LG WHISEN" and a call word in the case of a refrigerator may be set to "LG DIOS". In addition, setting of the call word may be changed by a user.

The controller 240 may control the communication unit 270 to transmit a user voice command that is input after a wake-up voice signal is recognized to the voice recognition server system 100 through the communication unit 270 (S1530).

When a home appliance is indefinitely on standby to receive a user voice command, system resources are wasted and user intention without command input and, thus, only a voice command that is input for a predetermined elapsing time may be set to be processed in a command standby mode (S1527).

In this case, the controller 240 may perform control to transmit voice data including a voice command received within the predetermining elapsing time to the voice server 110 (S1530).

When the controller 240 does not receive the voice command within the predetermining elapsing time (S1527), the controller 240 may perform control to be re-converted in the wake-up signal standby mode.

In some embodiments, upon receiving the voice command within the predetermined elapsing time (S1527), the controller 240 may perform control to perform a feedback operation corresponding to command reception to notify a user of command reception by the home appliance 200 (S1529).

In this case, under control of the controller 240, the driving unit 280 may perform a predetermined operation.

For example, when the home appliance 200 is the air conditioner 200a, the driving unit 280 may include the vane driving unit 1210, the fan driving unit 1220, and so on.

Upon receiving the voice command within the predetermined elapsing time, the vane driving unit 1210 may drive one or more vanes 261R, 261L, 261U, and 261D to perform an elevating, moving, rotation, and swing operations.

For example, the elevating device 1211 may elevate the upper vane 261U. When the upper vane 261U does not open a discharge port 207U and closes the discharge port 207U, the elevating device 1211 may elevate the upper vane 261U to a predetermined height.

The left vane driving device 1212 and the right vane driving device 1213 may rotate the left vane 261L and the right vane 261R at a predetermined angle under control of the controller 240.

The left vane driving device 1212 and the right vane driving device 1213 may control the left vane 261L and the right vane 261R to perform a swing operation of repeatedly rotating within a predetermined range.

The closing and opening device 1214 may move the lower vane 261D forward in an inward diction to open the lower front air discharge port 207D.

According to an embodiment of the present invention, upon receiving a voice command within a predetermined elapsing time, the closing and opening device 1214 may move the vanes 261R, 261L, 261U, and 261D to intuitively notify a user of command reception, thereby enhancing user reliability.

When a user inputs a voice command to the air conditioner 200a, the user intends to operate the air conditioner 200a in most cases, the vanes 261R, 261L, 261U, and 261D may be previously moved and, then, may be operated in response to the determined voice command to rapidly react to the user voice command.

The fan driving unit 1220 may drive a fan upon receiving the voice command within the predetermined elapsing time.

For example, the fan driving unit 1220 may rotate a stationary fan. Alternatively, the fan driving unit 1220 may lower rotation speed of a rotating fan or may stop the fan.

The voice server 110 and the voice recognition server system 100 including the same may recognize and process voice data including the voice command received from the home appliance 200, as described with reference to FIGS. 1 to 9.

Accordingly, when the communication unit 270 receives a control signal based on the voice command from the home appliance control server 130 (S1540), the controller 240 may control the home appliance 200 to be operated in response to the received control signal (S1545).

When the communication unit 270 receives a response signal based on the voice command from the voice server 110 (S1550), the controller 240 may control the audio output unit 291 to output a voice guidance message corresponding to the received response signal (S1570).

In some embodiments, when the response signal does not include voice data (S1560), the controller 240 may make a request for voice data to the voice server 110 (S1565) and may perform control to receive the requested voice data from the voice server 110.

According to a voice recognition result, the controller 240 may receive a signal corresponding to voice recognition failure from the voice server 110 through the communication unit 270. In this case, the controller 240 may control the audio output unit 291 to output a voice guidance message for requesting re-input of a voice command and control the audio output unit 291 to be re-converted into the command standby mode.

According to whether the determined voice command is supportable, the controller 240 may receive a signal indicating that the voice command is related to a non-supportable function, from the voice server 110 through the communication unit 270 (S1535). In this case, the controller 240 may control the audio output unit 291 to output a voice guidance message indicating that the voice command is related to a non-supportable function (S1537).

In this case, the controller 240 may perform control to be converted into a wake-up signal standby mode.

The controller 240 may perform control to be re-converted into the command standby mode.

According to the present invention, a voice guidance message appropriate for each situation may be provided to advantageously and accurately recognizing a problem in which an operation is not normally controlled during a voice control command. In addition, a freedom degree of a command for control of products may be increased to enhance usability.

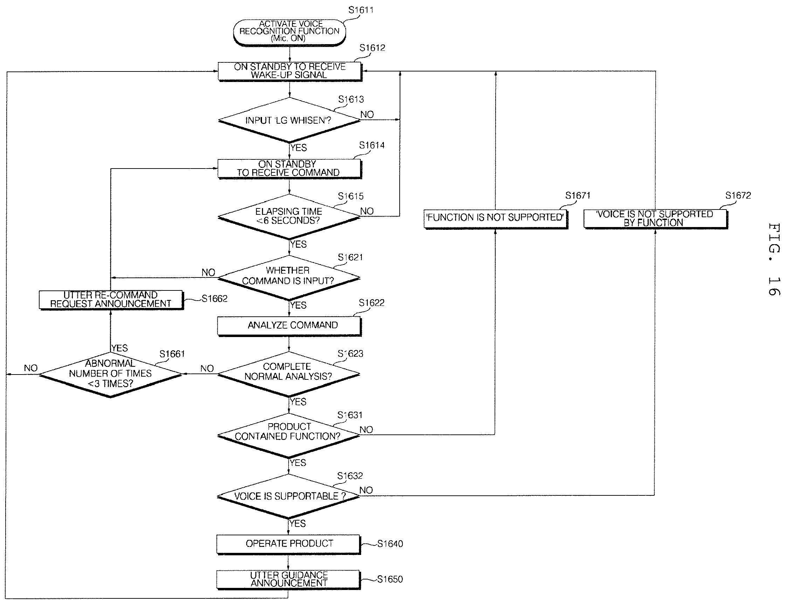

FIG. 16 is a flowchart showing a method of operating a smart home system including a voice recognition server system and a home appliance according to an embodiment of the present invention.

Referring to FIG. 16, the home appliance 200 may activate a voice recognition function (S1611) and may enter a wake-up signal standby mode for input of a wake-up voice signal including a predetermined call word (S1612).

When a predetermined call word such as "LG WHISEN" and "LG DIOS" is input to the home appliance 200 through the MICs 221 and 222 (S1613), the home appliance 200 may be converted into a command standby mode for receiving the voice command (S1614).

Setting may be provided to process only a voice command input for a predetermined elapsing time in a command standby mode (S1615). For example, an elapsing time of 6 seconds may be set and, in this case, the controller 240 may perform control to transmit voice data including the voice command received within 6 seconds, to the voice server 110 (S1621).

When the controller 240 does not receive the voice command within the predetermined elapsing time (S1621), the controller 240 may perform control to be re-converted into the wake-up signal standby mode.

According to an aspect of the present invention, the home appliance 200 may perform only a voice recognition procedure up to determination of whether call word voice is input and voice recognition of a next user voice input may be performed by the voice recognition server system 100.

Upon receiving voice data including a voice command from the home appliance 200 (S1621), the voice server 110 may perform natural language processing to analyze user intention and to determine a voice command (S1622).

When the voice server 110 does not normally analyze the voice command (S1623), the voice server 110 may notify the home appliance 200 about voice command analyze failure and the home appliance 200 may utter a voice guidance message including re-command request announcement of a user (S1662).

In this case, re-command request and re-command analysis procedures in the case of voice command analysis failure may be set to be performed a predetermined number of times (S1661).

For example, when normal analysis fails three times or more, the controller 240 may perform control to be re-converted into the wake-up signal standby mode without making a request for a re-command.

When the voice command is normally analyzed (S1623), the voice server 110 may transmit a signal corresponding to the determined voice command to the link service server 120.

The link service server 120 may determine whether the determined voice command is supportable.

For example, the link service server 120 may determine whether the determined voice command is a function supported by the corresponding home appliance 200 (S1631).

The link service server 120 may determine whether the determined voice command is a function supported by the corresponding home appliance 200 in a current state and whether a corresponding function is provided from a voice command (S1632).

When the determined voice command is not a supportable function, the link service server 120 may transmit a response signal indicating that a corresponding function is not supportable by the home appliance 200 through the voice server 110, as described with reference to FIGS. 1 to 9.

Accordingly, the home appliance 200 may output a voice guidance message such as 'The function is not supported.' or 'Voice function is not supported.' (S1671 and S1672).

The controller 240 may perform control to be converted into a wake-up signal standby mode.

When the determined voice command is related to the home appliance 200, the link service server 120 may communicate with the home appliance control server 130 to perform a corresponding operation.

When the determined voice command is not related to the home appliance 200, the link service server 120 may communicate with an external service to perform a corresponding operation.

When the determined voice command is related to control of the home appliance 200, the link service server 120 may generate a request signal corresponding to the determined voice command and transmit the request signal to the home appliance control server 130.

The home appliance control server 130 may receive the request signal from the link service server 120 and transmit a control signal based on the request signal to the home appliance 200.

For example, upon receiving a request for a change in setting temperature of the air conditioner 200a, the home appliance control server 130 may transmit a control signal for a change in setting temperature, to the air conditioner 200a.

The home appliance 200 may perform a corresponding operation according to the control signal received from the home appliance control server 130 (S1640).

The home appliance 200 may perform a requested operation and, then, transmit a signal indicating that the operation is performed, to the home appliance control server 130.

The home appliance control server 130 may receive a response signal of the control signal from the home appliance 200 and transmit processing result information indicating that an operation related to a request, to the link service server 120.

The link service server 120 may transmit a signal corresponding to processing result information such as "Temperature of air conditioner is set to 18 degrees." to the NLP server 112 and the NLP server 112 may transmit a response signal based on the determined user voice command to the home appliance 200.

The home appliance 200 may utter a voice guidance message including guidance announcement such as "Temperature of air conditioner is set to 18 degrees." based on voice data received from the voice server 110 (S1650).

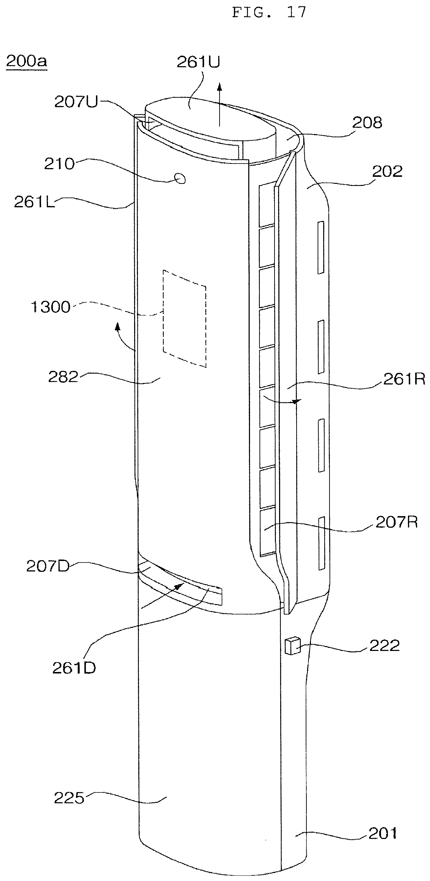

FIGS. 17 to 21 are diagram for explanation of various operations of a voice recognition server system and a home appliance according to an embodiment of the present invention.

According to an embodiment of the present invention, upon receiving a voice command within a predetermined elapsing time, the home appliance 200 may perform a feedback operation corresponding to command reception to notify a user of command reception.

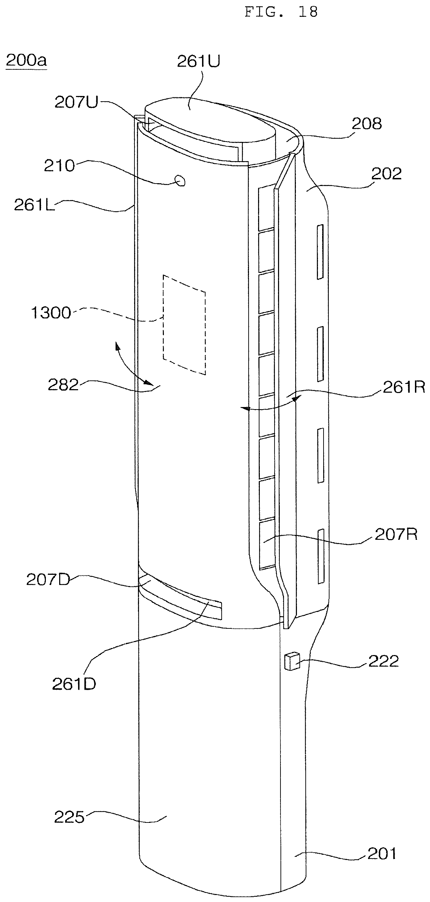

FIGS. 17 and 18 show feedback operations that are performed when the home appliance 200 is the air conditioner 200a.

Referring to FIG. 17, upon receiving a voice command within a predetermined elapsing time through the MICs 221 and 222 of the air conditioner 200a, the vane driving unit 1210 may elevate the upper vane 261U to a predetermined height.

The vane driving unit 1210 may rotate the left vane 261L and the right vane 261R at a predetermined angle.

The vane driving unit 1210 may move the lower vane 261D forward in a in an inward diction to open the lower front air discharge port 207D.

When the air conditioner 200a is not operated in a specific driving mode and air discharge ports are close, upon receiving a voice command, the vane driving unit 1210 may drive all the plurality of vanes 261R, 261L, 261U, and 261D under control of the controller 240.

The vane driving unit 1210 may drive some of the plurality of vanes 261R, 261L, 261U, and 261D.

Referring to FIG. 18, upon receiving a voice command within a predetermined elapsing time through the MICs 221 and 222, the vane driving unit 1210 may rotate the left vane 261L and the right vane 261R at a predetermined angle under control of the controller 240.

The vane driving unit 1210 may control the left vane 261L and the right vane 261R to perform a swing operation of repeatedly rotating within a predetermined range.

According to an embodiment of the present invention, when a voice command is received within a predetermined elapsing time, the vanes 261R, 261L, 261U, and 261D may be moved to intuitively notify a user of command reception, thereby enhancing user reliability.

When a user inputs a voice command to the air conditioner 200a, the user intends to operate the air conditioner 200a in most cases, the vanes 261R, 261L, 261U, and 261D may be previously moved and, then, may be operated in response to the determined voice command to rapidly react to the user voice command.

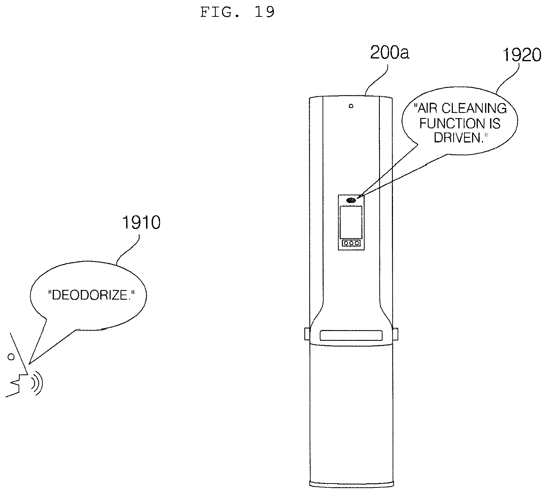

FIGS. 19 to 21 are diagrams showing various examples of a case in which an air conditioner performs a corresponding operation in response to input of a natural language voice command of a user.

Referring to FIG. 19, a user may input a voice command 1910 with a natural language such as "Deodorize.". The air conditioner 200a that receives the voice command 1910 of the user through the MICs 221 and 222 may transmit the voice command 1910 to the voice recognition server system 100.

The voice recognition server system 100 may analyze the received voice command 1910 to determine user intention of desiring an air cleaning function. Accordingly, the voice recognition server system 100 may transmit a control signal indicating driving of an air cleaning function and a response signal corresponding to a corresponding operation, to the air conditioner 200a.

The air conditioner 200a may drive the air cleaning function and output a voice guidance message 1920 such as "Air cleaning function is driven.".

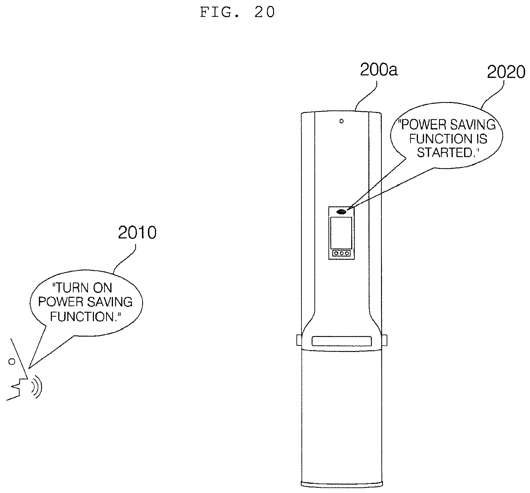

Referring to FIG. 20, a user may input a voice command 2010 with a natural language such as "Turn on power saving function.". The air conditioner 200a that receives the voice command 2010 of the user through the MICs 221 and 222 may transmit the voice command 2010 to the voice recognition server system 100.

The voice recognition server system 100 may analyze the received voice command 2010 to determine user intention of desiring a power saving function. Accordingly, the voice recognition server system 100 may transmit a control signal indicating that the power saving function is to be driven and a response signal corresponding to a corresponding operation, to the air conditioner 200a.

The air conditioner 200a may drive the power saving function and output a voice guidance message 2020 such as "Power saving function is started.".

According to an embodiment of the present invention, when the determined voice command is not related to the home appliance 200a, the voice recognition server system 100 may communicate with an external service 121 to perform a corresponding operation.

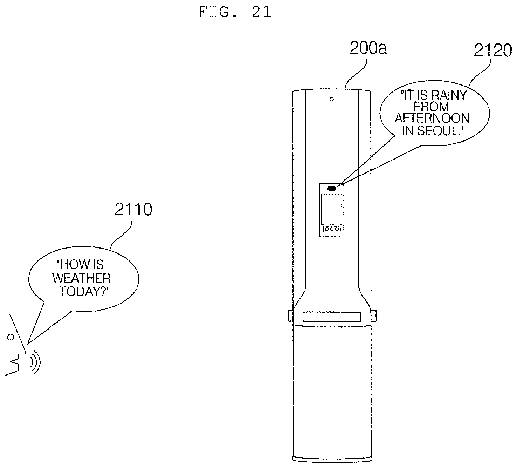

Referring to FIG. 21, a user may input a voice command 2110 with a natural language such as "How is weather today?". The air conditioner 200a that receives the voice command 2110 of the user through the MICs 221 and 222 may transmit the voice command 2110 to the voice recognition server system 100.

The voice recognition server system 100 may analyze the received voice command 2110 to determine user intention of desiring weather information. Accordingly, the voice recognition server system 100 may access an external service or Internet network for providing weather information to make a request and receive for weather information.

The voice recognition server system 100 may transmit data based on the received weather information to the home appliance 200a.

The air conditioner 200a may output a voice guidance message 2120 including weather information such as "It is rainy from afternoon in Seoul." based on the received data.

The voice server, the voice recognition server system, and a method of operating a home appliance according to the exemplary embodiments of the present invention are not limited to the configurations and methods of the above-described embodiments. That is, the above-described embodiments may be partially or wholly combined to make various modifications.

The voice server, the voice recognition server system, and the method of operating a home appliance according to the exemplary embodiments of the present invention may be embodied as a processor readable code on a processor readable recording medium. The processor readable recording medium is any data storage device that can store data which can be thereafter read by a computer system. Examples of the processor readable recording medium include read-only memory (ROM), random-access memory (RAM), CD-ROMs, magnetic tapes, floppy disks, optical data storage devices, etc. The processor readable recording medium can also be distributed over network coupled computer systems so that the computer readable code is stored and executed in a distributed fashion.

According to at least one of embodiments of the present invention, a home appliance may be operated according to a voice input and, thus, a user does not inevitably manipulate a remote controller, thereby enhancing user convenience.

According to at least one of embodiments of the present invention, a natural language may be effectively recognized and processed.

According to at least one of embodiments of the present invention, user experience (UX) in consideration of various situations that may occur during a voice recognition procedure and a home appliance control procedure may be provided.

Other various effects may be directly or implicitly proposed in the above detailed description of the present invention.

## Claims

1. A method of operating a voice server, the method comprising:
receiving voice data from a home appliance (S720);
converting the received voice data into text data (S731);
analyzing the text data to determine a voice command (S741);
transmitting a signal corresponding to the determined voice command to a predetermined server (S743);
receiving a response signal based on the determined voice command from the predetermined server (S770); and
converting a response signal based on the voice command into voice data (S783) and transmitting the response signal to the home appliance (S785).

2. The method of claim 1, wherein the response signal comprises processing result information corresponding to the determined voice command.

3. The method of claim 1, or 2, further comprising determining whether the determined voice command is supportable,
wherein, when the determined voice command contains a non-supportable command, the voice data transmitted to the home appliance is a signal indicating that the determined voice command is a function that is not supported by the home appliance.

4. A voice server (110) comprising:
an automatic speech recognition server (111) configured to receive voice data from a home appliance and to convert the received voice data into text data;
a natural language processing server (112) configured to receive the text data from the automatic speech recognition server and to analyze the received text data to determine a voice command; and
a text to speech server (113) configured to convert a response signal based on the voice command into voice data and to transmit the voice data to the home appliance.

5. The voice server of claim 4, wherein the natural language processing server transmits a signal corresponding to the determined voice command to a predetermined server and receives a response signal based on the determined voice command from the predetermined server.

6. The voice server of claim 5, wherein the response signal comprises processing result information corresponding to the determined voice command.

7. A method of operating a voice recognition server system, the method comprising:
analyzing voice data received from a home appliance to determine a voice command, by a voice server (S741);
receiving a signal corresponding to the determined voice command from the voice server, by a link service server (S743);
generating a request signal corresponding to the determined voice command, by the link service server (S761);
receiving the request signal from the link service server, by a home appliance control server (S761);
transmitting a control signal based on the request signal to the home appliance, by the home appliance control server (S763); and
transmitting voice data comprising processing result information based on the voice command to the home appliance, by the voice server (S785).

8. The method of claim 7, further comprising receiving a response signal of the control signal from the home appliance, by the home appliance control server; and
transmitting processing result information corresponding to the response signal to the link service server, by the home appliance control server.

9. A voice recognition server system comprising:
a voice server (110) configured to receive voice data from a home appliance and to analyze the received voice data to determine a voice command;
a link service server (120) configured to receive a signal corresponding to the determined voice command from the voice server and to generate a request signal corresponding to the determined voice command; and
a home appliance control server (130) configured to transmit a control signal based on a request signal received from the link service server, to the home appliance,
wherein the voice server transmits voice data comprising processing result information based on the voice command, to the home appliance.

10. The voice recognition server system of claim 9,
wherein the voice server comprises:
an automatic speech recognition server configured to receive voice data from the home appliance and to convert the received voice data into text data;
a natural language processing server configured to receive the text data from the automatic speech recognition server and to analyze the received text data to determine a voice command; and
a text to speech server configured to convert a response signal based on the voice command into voice data and to transmit the voice data to the home appliance.

11. The voice recognition server system of claim 9, or 10, wherein the home appliance control server receives a response signal of the control signal from the home appliance and transmits processing result information corresponding to the response signal to the link service server.

12. The voice recognition server system of claim 9, 10, or 11, wherein the link service server makes a request for state information of the home appliance to the home appliance control server based on a signal corresponding to the determined voice command; and
wherein the home appliance control server transmits the state information of the home appliance to the link service server.

13. The voice recognition server system of claim 12,
wherein, when the determined voice command is supportable based on the state information of the home appliance, the link service server transmits a request signal corresponding to the determined voice command, to the home appliance control server.

14. The voice recognition server system of claim 12, or 13, wherein, when the determined voice command is not supportable based on the state information of the home appliance, the link service server transmits a signal indicating that a function is not supported by the voice server in a current state, to the voice server.

15. The voice recognition server system of any one of claims 10 to 14, wherein the voice server determines whether the determined voice command is supportable and, when the determined voice command contains a non-supportable command, the voice server transmits voice data indicating that the determined voice command is not supported by the home appliance, to the home appliance.
